Europäisches Patentamt

European Patent Office

Office européen des brevets

(19)

(11) **EP 0 657 727 B1**

(12) **FASCICULE DE BREVET EUROPEEN**

(45) Date de publication et mention
de la délivrance du brevet:
**01.04.1998 Bulletin 1998/14**

(51) Int Cl.⁶: **G01M 1/36**, H02K 15/16

(21) Numéro de dépôt: **94402815.8**

(22) Date de dépôt: **07.12.1994**

(54) **Dispositif et application pour l'équilibrage dynamique d'une pièce tournante en rotation**

Vorrichtung zum dynamischen Auswuchten eines drehenden Teils und Anwendung dazu

Device and application for the dynamic balancing of a rotating object

(84) Etats contractants désignés:
**AT BE CH DE DK ES FR GB GR IE IT LI LU MC NL PT SE**

(30) Priorité: **08.12.1993 FR 9314738**

(43) Date de publication de la demande:
**14.06.1995 Bulletin 1995/24**

(73) Titulaire: **ELECTRICITE DE FRANCE
Service National
75008 Paris (FR)**

(72) Inventeur: **Voinis, Philippe
F-92140 Clamart (FR)**

(74) Mandataire: **Polus, Camille et al
c/o Cabinet Lavoix
2, Place d'Estienne d'Orves
75441 Paris Cedex 09 (FR)**

(56) Documents cités:
**EP-A- 0 460 282          US-A- 4 867 006**

- **PATENT ABSTRACTS OF JAPAN vol. 14, no. 474 (P-1117) 16 Octobre 1990 & JP-A-02 190 732 (OOMIYA KOGYO KK) 26 Juillet 1990**

## Description

La présente invention concerne l'équilibrage des pièces aptes à tourner selon un axe et susceptibles de prendre un balourd, et a plus particulièrement pour objet une technique permettant d'équilibrer dynamiquement pendant sa rotation une telle pièce.

Comme on le sait, une pièce apte à tourner selon un axe doit être équilibrée dynamiquement pour, lors de sa rotation, ne pas engendrer de perturbations qui résultent d'un balourd. Un balourd existe lorsqu'il y a non coïncidence ou décalage entre le centre de gravité de la pièce et son axe de rotation. Il est bien connu qu'une masse $\underline{m}$ située à la distance $\underline{r}$ d'un axe qui tourne à la vitesse angulaire $\omega$ est soumise à une force radiale centrifuge $\underline{f}$ qui satisfait à la relation :

$$\underline{f} = m\omega^2 r$$

Le terme $\omega^2 r$ correspond au module d'un champ de gravité circulaire.

On comprend donc que lorsque le centre de gravité et l'axe de rotation ne sont pas rigoureusement confondus il se crée un balourd et ce balourd engendre des efforts périodiques qui induisent souvent des vibrations forcées voire des résonances qui sont particulièrement néfastes voire destructrices.

Ce type de situation se rencontre pour toutes les machines tournantes qu'elles soient domestiques ou industrielles, par exemple dans les centrales électriques de production d'énergie qui sont équipées de groupes turboalternateurs. Dans certaines centrales nucléaires dont la puissance dépasse plusieurs centaines de mega-watts un groupe turboalternateur de très grande dimension tourne à raison de 1500 t/min environ si bien que le champ de gravité circulaire avoisine 15000 N/kg. Dans une centrale nucléaire en exploitation normale, on admet, habituellement, que les défauts d'équilibrage de la ligne d'arbre d'une machine tournante ne doivent pas engendrer de vibrations dont l'amplitude, crête à crête, dépasse 100 μm environ à la vitesse nominale de rotation par exemple 1500 t/min.

On conçoit toutes les difficultés qu'il y a à assurer un tel équilibrage dynamique qui, actuellement se fait à l'arrêt, par approximations successives, au cours de "campagnes" qui imposent un certain nombre de lancements et d'arrêts successifs du groupe turboalternateur afin d'évaluer ses défauts selon une matrice multiplan de coefficients d'influence obtenue à l'aide de capteurs appropriés judicieusement disposés, puis évaluation faite de les corriger. Outre le fait que de tels arrêts sont coûteux par les pertes de production et d'exploitation qu'ils produisent, ils sont particulièrement délicats à conduire et nocifs pour l'installation car les variations de vitesse de rotation qu'ils imposent font passer la ligne d'arbre par des vitesses critiques qui engendrent des phénomènes vibratoires transitoires à des fréquences de résonances. Cette technique traditionnelle d'équilibrage dynamique vise à trouver une solution de compromis pour satisfaire au mieux aux impératifs requis pour les niveaux de vibration à la vitesse de rotation nominale et aux vitesses critiques franchies au cours des phases d'accélération et de ralentissement lors des mises en marche et des arrêts. Cette solution de compromis n'est optimale ni pour la vitesse nominale ni pour les vitesses critiques.

Si l'on sait équilibrer dynamiquement une telle ligne d'arbre à l'arrêt pour que ses défauts restent contenus dans des limites acceptables, d'autres défauts apparaissent en cours de fonctionnement. Certains de ces défauts sont irréversibles, d'autres sont réversibles et leur évolution peut-être alors lente ou rapide. De tels défauts apparaissent par exemple lorsqu'une turbine perd une ailette ou aube ou bien lorsque les bobinages de l'inducteur se dilatent par effet Joule et agissent sur les barres qui les maintiennent en place dans leur logement du rotor.

On comprend qu'un équilibrage dynamique satisfaisant peut donc se dégrader et engendrer des vibrations qui franchissent les seuils fixés.

Pour tenter de remédier à cette difficulté, diverses techniques ont été proposées pour essayer de contenir les conséquences dommageables d'un défaut d'équilibrage dynamique d'une pièce tournante en mouvement pendant sa rotation.

Toutes les techniques proposées visent à maîtriser l'apparition des phénomènes vibratoires ou bien à atténuer le développement de leur transmission.

Des techniques d'équilibrage dynamique en cours de rotation sont décrites dans les documents EP-A-460 282 et US-A-4867006.

Une autre technique consiste à agir sur la raideur des paliers portant la ligne d'arbre à l'aide de matériaux à mémoire de forme de manière à adapter la raideur d'un palier en agissant sur la température du métal pour franchir les vitesses critiques (Gumma Uni, Japon, 1987) ou à l'aide de fluides électrorhéologiques en agissant sur le champ électrique auquel ils sont soumis (D. Brooks, Londres, 1992). Une autre technique consiste à générer une vibration qui a pris naissance à l'aide d'un actionneur hydraulique rapide (Althaus, Unis Munich, 1992).

On conçoit donc que ces techniques sont particulièrement délicates à mettre en oeuvre et nécessitent le plus souvent des approximations successives faites au cours d'arrêts de l'installation. Tout ceci est particulièrement long, fastidieux et coûteux.

Le but de l'invention vise à supprimer à leur source de préférence peu après leur apparition et au cours du fonctionnement, les vibrations générées par les balourds de la pièce qui tourne. L'invention concerne une technique qui permet d'obtenir un équilibrage dynamique optimal à toutes les vitesses voulues.

L'invention a pour objet un procédé pour équilibrer dynamiquement pendant sa rotation une pièce apte à tourner selon un axe et susceptible de prendre un balourd. Ce procédé est remarquable en ce qu'on détecte les vibrations engendrées par le balourd et on les traite pour déterminer l'intensité et la phase de ce balourd, on déplace à distance constante de l'axe et indépendamment l'un de l'autre au moins deux satellites d'équilibrage de masses déterminées destinés à créer un contrebalourd pour en modifier l'écart angulaire relatif voire la position d'ensemble en conservant leur écart angulaire relatif, on capte la position qu'occupe chacun des satellites et on immobilise les satellites dans les positions où ils ont été placés lorsque les différences de l'intensité et de la phase de ce contre-balourd et de celles de ce balourd sont inférieures à des valeurs de consigne prédéterminées correspondantes de manière à équilibrer dynamiquement la pièce en rotation.

L'invention a pour objet un dispositif pour équilibrer dynamiquement pendant sa rotation une pièce apte à tourner selon un axe et susceptible de prendre un balourd, notamment pour la mise en oeuvre du procédé indiqué précédemment. Ce dispositif est remarquable en ce qu'il comprend au moins une piste circulaire coaxiale à l'axe, des moyens de fixation pour maintenir cette piste fixe relativement à l'axe, au moins deux masselottes d'équilibrage portées par cette piste de manière à pouvoir y être déplacées, des moyens de retenue associés aux masselottes et reliant piste et masselottes pour que celles-ci ne puissent pas s'en séparer radialement, des moteurs reliés chacun à l'une des masselottes pour les déplacer relativement à la piste, une alimentation pour les moteurs et une commande pour agir sur l'alimentation de chacun des moteurs afin de déplacer les masselottes séparément voire à l'unisson de manière à générer en rotation un contre-balourd équilibrant le balourd qui a pris naissance.

L'invention a aussi pour objet l'application du procédé ou du dispositif précédents notamment à une machine tournante par exemple électrique tel un groupe turboalternateur.

D'autres caractéristiques de l'invention apparaîtront à la lecture de la description et des revendications qui suivent, ainsi qu'à l'examen du dessin annexé, donné seulement à titre d'exemple, où :

- la Figure 1 est une vue perspective schématique partielle de l'application particulière de l'invention à une ligne d'arbre d'un groupe turboalternateur d'une centrale électrique;
- les Figures 2A, 2B et 2C sont des schémas illustrant la mise en oeuvre de l'invention;

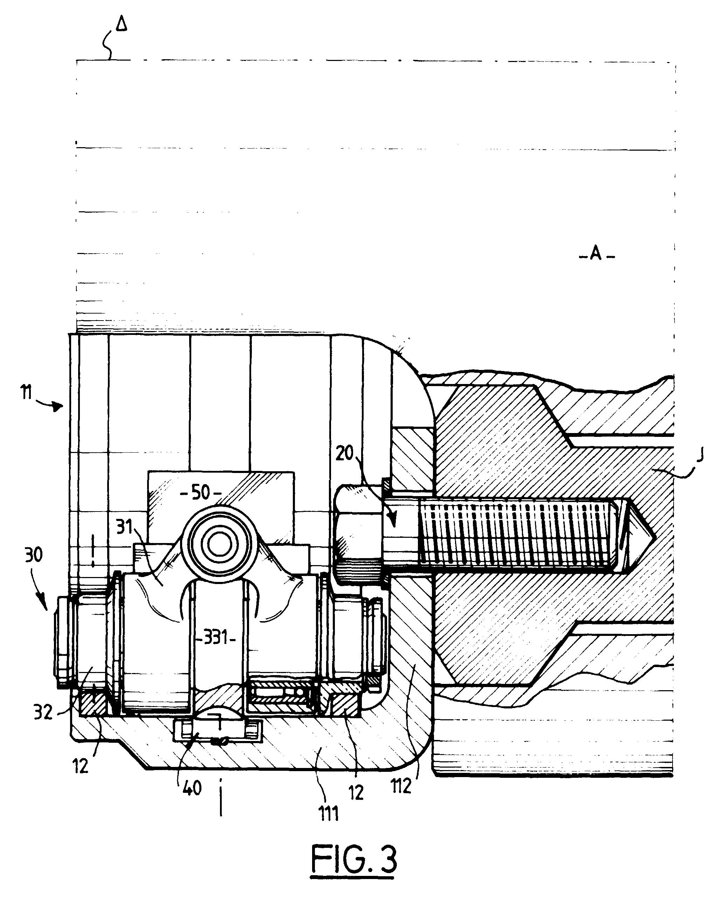

- la Figure 3 est une vue en élévation et en coupe partielle méridienne par l'axe, d'un mode de réalisation d'un dispositif selon l'invention;

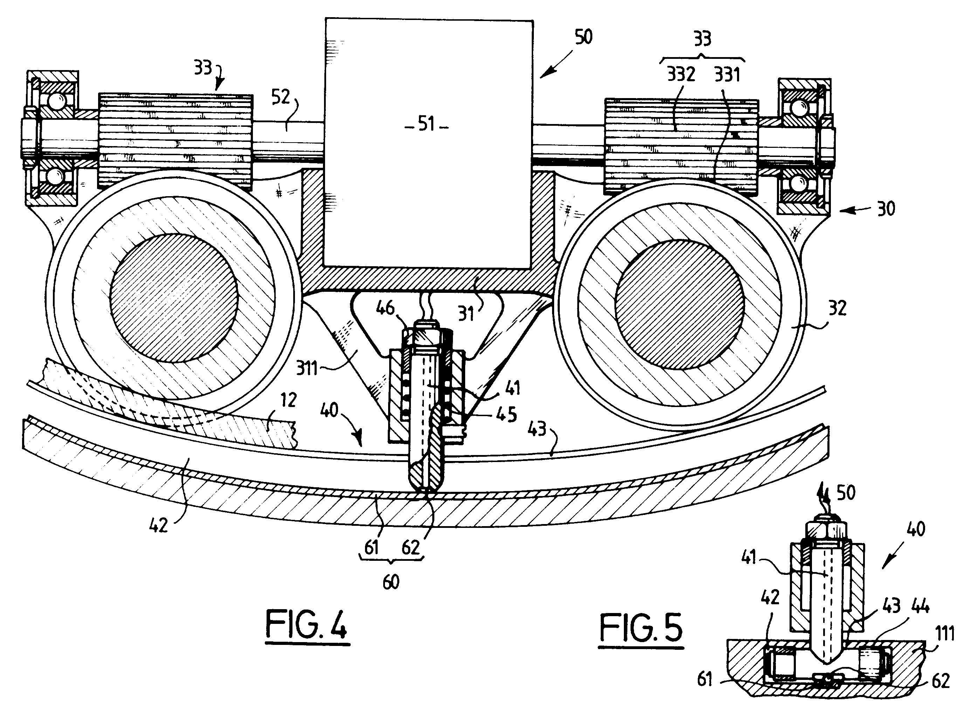

- la Figure 4 est une vue du mode de réalisation de la Figure 3 en coupe partielle transversalement à l'axe; et,
- la Figure 5 est une vue partielle de détail de constituants d'un dispositif selon l'invention en coupe méridienne.

L'équilibrage dynamique d'une pièce apte à tourner selon son axe et les groupes turboalternateurs en particulier étant bien connus dans la technique, on ne décrira dans ce qui suit que ce qui concerne directement ou indirectement l'invention. Pour le surplus, l'Homme du Métier de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un mode de réalisation d'un dispositif selon l'invention, avant d'en exposer au besoin la fabrication, le montage et le fonctionnement.

Dans ce qui suit, l'invention est décrite dans son application aux machines tournantes par exemple électriques telles qu'un groupe turboalternateur d'une centrale électrique par exemple nucléaire.

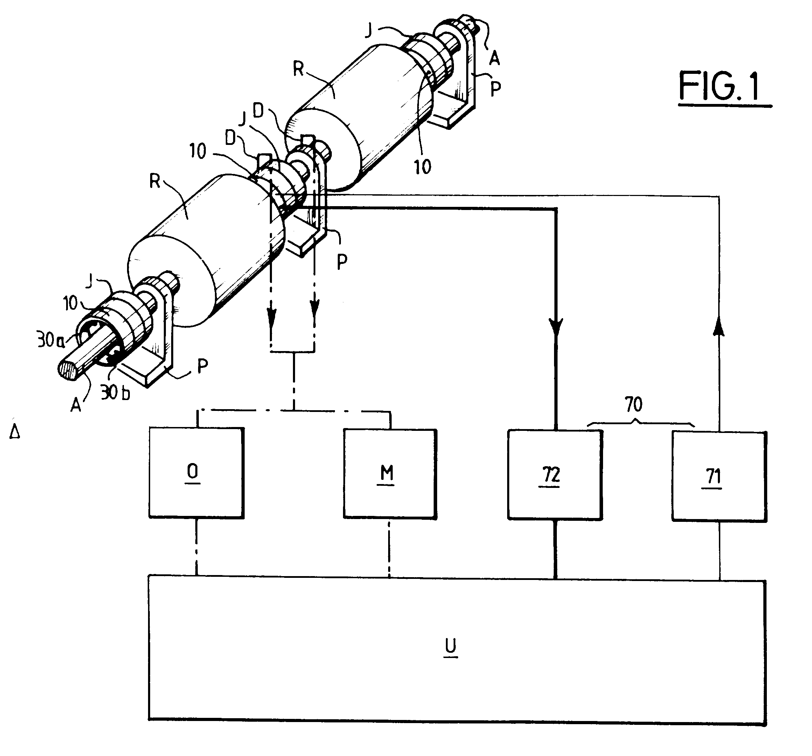

Comme on le voit schématiquement sur la Figure 1, des rotors R sont montés solidaire en rotation d'une ligne d'arbre A habituellement en plusieurs tronçons réunis par des accouplements ou jonctions J. Cette ligne d'arbre est portée par des paliers P appropriés et tourne selon un axe $\Delta$. Tout ceci est classique.

Des détecteurs de vibrations D de tous types appropriés classiques connus sont, par exemple, disposés sur au moins un palier P et au moins un accouplement J, comme illustré.

Ces détecteurs D sont reliés à une unité de traitement U qui comprend un calculateur approprié, par l'intermédiaire d'entités qui permettent une saisie automatique O des informations ou bien une saisie manuelle M de celles-ci. Les liaisons électriques entre parties fixes et parties tournantes sont faites selon toute technique classique appropriée connue, par exemple à l'aide d'un collecteur électrique multipistes et de balais frotteurs.

Tout ceci est classique et permet de mesurer l'amplitude et la fréquence des vibrations du groupe turboalternateur grâce à une technique d'équilibrage matricielle multiplan à coefficients d'influence et ainsi d'évaluer le balourd en intensité et phase. On rappellera brièvement que cette technique d'équilibrage matricielle multiplan fait appel à un couple de balourd unitaire témoin, par exemple créé à l'aide d'une masse de 1 kg placée à lm de l'axe, que l'on dispose successivement dans l'un des $\underline{n}$ plans d'équilibrage choisis et à des détecteurs de vibrations situés aux extrémités des paliers. On évalue l'amplitude et la phase des vibrations à cet endroit. Les deux valeurs de l'amplitude et de la phase "matérialisent" le coefficient d'influence du n-ième plan d'équilibrage sur le p-ième détecteur.

Comme indiqué brièvement précédemment, lorsqu'un tel groupe turboalternateur tourne son équilibrage dynamique initial peut se modifier ou se détruire au cours du fonctionnement.

Le but de l'invention est de permettre l'équilibrage dynamique pendant la rotation sans qu'il soit nécessaire d'arrêter l'ensemble tournant.

Pour ce faire, on utilise au moins un dispositif selon l'invention qui comprend essentiellement, notamment au moins une piste 10 circulaire, des moyens de fixation 20 de chaque piste sur l'axe, au moins deux masselottes 30 mobiles sur la piste, des moyens de retenue 40 pour interdire aux masselottes de se séparer radialement de la piste, au moins deux moteurs électriques 50 reliés chacun à l'une des masselottes pour les déplacer relativement à la piste, une alimentation 60 et une commande 70.

La piste 10 circulaire coaxiale à l'axe Δ, se présente par exemple à la manière d'une virole 11 en L. Cette virole en équerre possède une aile 111 parallèle à l'axe Δ et une aile 112 perpendiculaire à l'axe Δ. Un chemin de roulement 12 est ménagé sur la face intérieure de l'aile 111 parallèle à l'axe Δ. Comme clairement illustré, ce chemin de roulement 12 se présente par exemple sous la forme de deux rails métalliques traités thermiquement ou analogues, parallèles de tous types appropriés fixés à l'aile 111. Il est clair que la forme de la virole 11 n'est pas limitée à la configuration en équerre et est choisie en fonction des possibilités d'implantation de la piste 10 sur la machine.

Les moyens de fixation 20, de tous types appropriés connus tels que des boulons comme illustré, traversent l'aile 112 de la virole par des trous et se vissent par exemple dans des taraudages d'un accouplement qui réunit deux tronçons d'arbre comme illustré.

Chacune des masselottes 30, mobile indépendamment sur la piste, se présente par exemple à la manière d'un chariot 31 avec un prolongement 311 radial centrifuge. Le chariot 31 est muni de roues 32, par exemple quatre, s'il y a lieu du type ferroviaire à boudin latéral comme illustré. Un mécanisme d'entraînement ou transmission 33 de tout type approprié connu fait par exemple d'au moins un pignon 331 calé et solidaire en rotation des roues est entraîné par une vis sans fin 332 tangente.

Les moyens de retenue 40 interdisent aux masselottes 30 de se séparer radialement de la piste 10, vers l'axe en particulier lorsque l'arbre est à l'arrêt ou au cours des phases de démarrage ou de ralentissement. Les moyens de retenue 40 comprennent par exemple un support 41 par exemple en double équerre relié au prolongement 311, et une gorge 42 à section droite transversale en T avec une fente 43 ouverte vers l'axe et que traverse le support 41. Comme on le voit le support 41 porte sur chacune des branches de l'équerre double un galet 44 , par exemple un roulement à billes, apte à rouler dans la gorge. Un ressort 45 enfilé sur le support 41 est monté comme illustré. Un écrou 46 permet de régler la force développée par le ressort et donc celle du frottement des roues sur les rails.

Chaque moteur 50 comprend une carcasse 51 fixée de toute manière appropriée au chariot 31 et un axe 52 dont l'une au moins des extrémités porte par exemple une vis sans fin 332.

De ce qui précède, on comprend que chaque groupe constitué notamment d'une masselotte, de ses moyens de retenue et de son moteur forme une entité comparable à un satellite 30a, 30b de masse déterminée apte à se déplacer sur la piste et à y être immobilisé dans une position relative choisie.

L'alimentation 60 comprend par exemple au moins une bande 61 conductrice isolée de la piste, et au moins un patin 62 ou balai frotteur coopérant avec la bande conductrice pour alimenter le moteur correspondant. Tout ceci est clairement illustré sur le dessin.

La commande 70 comprend un générateur 71 d'instructions de pilotage pour agir à volonté sur chaque moteur par l'intermédiaire de son alimentation correspondante, ainsi qu'un capteur 72 de position de chaque masselotte, de tout type approprié.

Les constituants d'un dispositif selon l'invention sont fabriqués dans des matériaux convenables classiques par exemple métalliques ou synthétiques, travaillés, usinés et mis en forme selon des techniques courantes appropriées.

Tous les constituants d'un dispositif selon l'invention sont rassemblés, réunis et montés comme cela ressort clairement des figures du dessin.

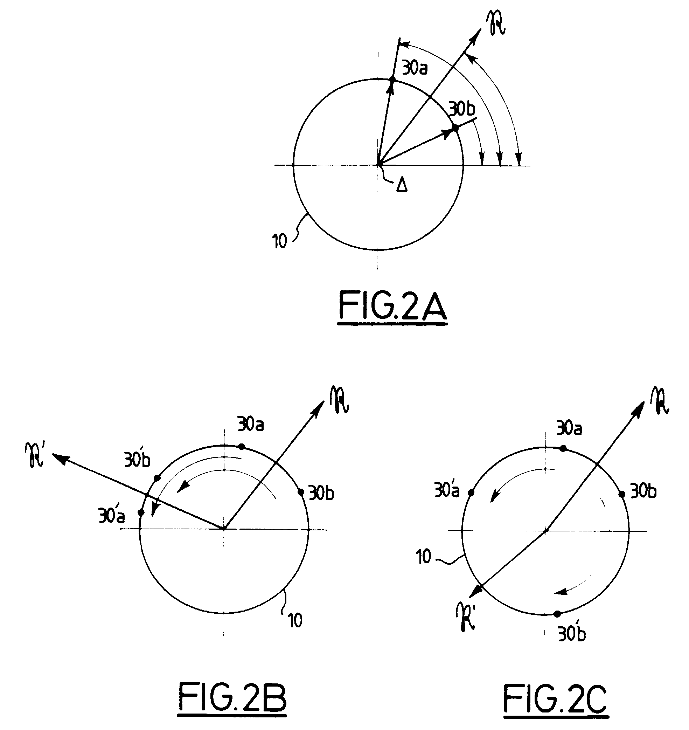

On se reportera maintenant aux Figures 2A, 2B et 2C schématiques pour expliquer le fonctionnement d'un dispositif selon l'invention.

A l'état initial les deux masselottes et tout ce qui leur est associé c'est à dire les satellites 30a et 30b portés par une piste 10 sont par exemple dans la position où ils sont illustrés sur la Figure 2A d'une manière très schématique. Les satellites qui tournent avec l'arbre selon l'axe Δ à la vitesse angulaire ω et qui sont situés à la distance $\underline{r}$ ont, chacun, une masse $\underline{m}$ et engendrent donc chacune un contre-balourd propre dont la résultante $\mathcal{R}$ des deux équilibre le balourd initial de la pièce tournante, ici le rotor d'un groupe turboalternateur, en intensité et phase et cela à l'aide de la technique matricielle multiplan rappelée auparavant.

Si au cours du fonctionnement le balourd initial se modifie et un balourd différent prend naissance, que celui-ci soit réversible ou irréversible, et engendre des vibrations qui dépassent des seuils déterminés préfixés et qui sont perçues par les détecteurs de vibrations D et saisies et traitées par l'unité U, on agit indépendamment sur les deux satellites à partir des informations connues obtenues par les détecteurs de vibrations D et par les capteurs de position 72, pour les déplacer jusqu'aux positions 30'a et 30'b illustrées sur la Figure 2B où ils créent un contre-balourd $\mathcal{R}'$ qui permet d'équilibrer le nouveau balourd qui a pris naissance. Sur la Figure 2B on voit que chacun des deux satellites a été déplacé séparément. Il va de soi si seule l'intensité de

la résultante $\mathcal{R}$ reste constante et que sa direction et sa phase doivent être par contre modifiées, on peut alors déplacer à l'unisson les deux satellites.

Sur la Figure 2B, les satellites ont été déplacés dans le même sens. Dans certains cas, pour des raisons d'optimisation du fonctionnement et de réduction du temps de réponse, on peut faire se déplacer indépendamment les deux satellites 30a et 30b dans des sens opposés comme illustré sur la Figure 2C. De même les satellites peuvent être déplacés simultanément à vitesses constantes ou à des vitesses évolutives. Ce choix est dicté par la simplicité de la conduite des satellites alliée à la minimisation des perturbations qui prennent naissance pendant la phase intermédiaire de leur déplacement.

Les instructions de pilotage qui servent à commander les déplacements de chacun des satellites en sens et course, sont produites par le générateur 71 qui est connecté à chacun des moteurs par l'entremise de l'alimentation. Ce générateur 71 est associé ou inclus dans l'unité de traitement U.

L'unité de traitement U est par exemple un calculateur tel un ordinateur de type approprié. La rédaction des programmes ou suites d'instructions pour traiter les données reçues et en obtenir des informations de manière à commander les déplacements des satellites afin de contenir les vibrations de balourd au dessous des seuils de consignes assignés, est bien connue et ne fait pas partie de l'invention.

Pour exposer l'invention on a supposé que l'on plaçait un dispositif au voisinage immédiat d'un accouplement réunissant deux tronçons d'arbre successifs de la ligne d'arbre. Il est clair qu'une telle localisation n'est pas impérative et qu'on peut placer un dispositif selon l'invention en un autre endroit pour des raisons d'efficacité ou d'encombrement par exemple.

Afin de mesurer la phase des satellites on met à profit la piste à laquelle on associe un capteur de position. On ménage sur la piste un repère fixe qui sert d'origine et qui peut être détecté par le capteur à son passage, et on équipe chacun des satellites d'une marque qui lui est propre et qui peut être détectée et identifiée par le capteur à chacun de leur passage. Un traitement approprié des signaux émis par le capteur permet à chaque tour de mesurer la durée qui s'écoule entre les passages du repère origine et ceux des marques propres aux satellites et, ainsi, de mesurer la phase.

Le dispositif selon l'invention, pour son application aux groupes turboalternateur doit pouvoir fonctionner dans un champ de gravité circulaire atteignant 20 000 N/kg, dans un champ magnétique de l'ordre du tesla, et dans une atmosphère dont la température peut atteindre 100° C environ et dont l'humidité relative peut avoisiner 100%.

La piste qui doit faire l'objet d'un centrage précis est, de préférence, faite en deux demi-anneaux ou coquilles pour faciliter son montage et son démontage. Ces coquilles sont réunies par une liaison mécanique particulièrement robuste. La piste est faite en un acier ou en un alliage à haute résistance élastique et le profil de la virole présente de préférence des congés importants de l'ordre de 1 cm de rayon pour que les niveaux des contraintes ne dépassent pas la limite élastique du matériau utilisé sous l'action du champ de gravité circulaire centrifuge.

Les satellites ont une masse totale qui ne dépasse pas 5 kg et un encombrement de l'ordre de 120 x 120 x 240 mm.

Chaque moteur, alimenté de préférence en courant basse tension 12 ou 24 v, qui propulse un satellite doit développer un couple apte à vaincre essentiellement les forces de frottement. Il doit pouvoir déplacer un satellite de 10 cm en 1s et l'erreur sur la position d'un satellite doit être inférieure au centimètre. Il fonctionne par intermittence c'est à dire pendant 2 à 3h sous forme de cycles répétés de 2 ou 3 min, puis reste inactif pendant plusieurs mois.

On voit donc de ce qui précède que pour conduire la technique selon l'invention, de préférence, on pilote les satellites pour créer différents balourds connus, on saisit manuellement ou automatiquement les données délivrées par les détecteurs de vibrations, on traite ces données pour obtenir et mémoriser les coefficients d'influence de la matrice multiplan et on mémorise des valeurs de consignes seuils à ne pas franchir. Ceci fait, on suit, en continu ou non, l'évolution des données délivrées par les détecteurs de vibrations et on les compare aux valeurs de consignes limites, on commande manuellement ou automatiquement le déplacement des satellites pour les placer dans de nouvelles positions déterminées en fonction des données délivrées par les détecteurs de vibrations et des coefficients d'influences mémorisés afin de rétablir ou maintenir et contenir les vibrations détectées dans les limites assignées.

On a décrit la technique selon l'invention à propos de la conduite d'un équilibrage dynamique pour une utilisation de la machine tournante à la vitesse nominale. Il est clair que la technique selon l'invention vaut aussi pour assurer un équilibrage dynamique optimal pour les différentes vitesses critiques de la machine tournante.

La description du dispositif et de son fonctionnement mettent bien en lumière le procédé selon l'invention.

On comprend donc tout l'intérêt du dispositif selon l'invention qui permet de compenser s'il y a lieu en temps réel, et en fonctionnement les défauts d'équilibrage dynamique existant et/ou qui peuvent prendre naissance dans une pièce tournante.

La technique selon l'invention a été exposée en détail à propos de son application particulière à un groupe turboalternateur d'une centrale électrique. Il est clair qu'elle s'applique de la même manière, mutatis mutandis, à toute pièce ou machine tournante telle une turbopompe, une motopompe, un compresseur, un ventilateur, un lave-linge, etc.

La description qui précède montre l'intérêt de la technique selon l'invention et fait saisir tous les avantages qu'elle apporte.

## Revendications

1. Dispositif pour équilibrer dynamiquement pendant sa rotation une machine tournante transformatrice d'énergie apte à tourner selon un axe (Δ) fait d'une ligne d'arbre (A) en plusieurs tronçons réunis par des accouplements (J) et portés par des paliers (P) et susceptible de prendre un balourd, caractérisé en ce qu'il comprend au moins une piste (10) circulaire coaxiale à l'axe (Δ), des moyens de fixation (20) pour maintenir cette piste (10) fixe relativement à l'axe (Δ), au moins deux masselottes (30) d'équilibrage portées par cette piste (10) de manière à pouvoir y être déplacées, des moyens de retenue (40) associés aux masselottes et reliant piste (10) et masselottes (30) pour que celles-ci ne puissent pas s'en séparer radialement, des moteurs (50) reliés chacun à l'une des masselottes (30) pour les déplacer relativement à la piste (10), une alimentation (60) pour les moteurs (50) et une commande (70) pour agir sur l'alimentation (60) de chacun des moteurs (50) afin de déplacer les masselottes (30) séparément voire à l'unisson de manière à générer en rotation un contre-balourd équilibrant le balourd qui a pris naissance et en ce que les moyens de fixation (20) du dispositif maintiennent la piste (10) contre au moins un accouplement (J) et en ce que des détecteurs de vibrations (D) sont placés sur au moins un accouplement (J) et au moins un palier (P).

2. Dispositif selon la revendication 1, caractérisé en ce que la piste (10) comprend une virole (11) avec une aile (111) parallèle à l'axe (Δ) et un chemin de roulement (12) sur la face intérieure de l'aile (111) parallèle à l'axe (Δ).

3. Dispositif selon la revendication 2, caractérisé en ce que chaque masselotte (30) comprend un chariot (31), des roues (32) portant le chariot (31) et reposant sur le chemin de roulement (12), et un mécanisme d'entraînement (33) accouplé au moteur (50) pour faire tourner les roues (32).

4. Dispositif selon la revendication 3, caractérisé en ce que le mécanisme d'entraînement (33) comprend au moins un pignon (331) solidaire en rotation d'au moins une roue (32) et au moins une vis sans fin (332) engrènant sur le pignon (331) et mue par le moteur (50).

5. Dispositif selon l'une quelconque des revendications 2 à 4, caractérisé en ce que l'alimentation (60) comprend au moins une bande (51) conductrice isolée de et portée par la face intérieure de l'aile (111) de la virole (11) parallèle à l'axe (Δ) et au moins un patin (62) apte à glisser contre la bande (61) et monté sur chaque masselotte (30).

6. Dispositif selon l'une quelconque des revendications 1 à 5, caractérisé en ce que la commande (70) comprend un générateur (71) d'instructions de pilotage pour déplacer les masselottes (30) et au moins un capteur (72) de position de chacune des masselottes (30).

7. Dispositif selon la revendication caractérisé en ce que la commande (70) est reliée à au moins un détecteur (D) de vibrations de l'axe (Δ) et à une unité (U) de traitement d'informations pour, en fonction des vibrations détectées et des positions des masselottes captées, faire déplacer les masselottes de manière à générer en rotation un contre-balourd équilibrant le balourd qui a pris naissance.

## Patentansprüche

1. Vorrichtung zum dynamischen Auswuchten einer drehenden Energieumformungsmaschine während ihrer Drehung, welche sich entlang einer Achse (Δ) drehen kann, die aus einer Fluchtlinie (A) aus mehreren Abschnitten besteht, die durch Kopplungen (J) verbunden sind und von Lagern (P) getragen werden, und die eine Unwucht annehmen kann, dadurch gekennzeichnet, daß sie mindestens eine kreisförmige Spur (10), die zur Achse (Δ) koaxial ist, Befestigungsmittel (20), um diese Spur (10) in bezug zur Achse (Δ) fest zu halten, mindestens zwei Fliehgewichte (30) zum Auswuchten, die von dieser Spur (10) getragen werden, so daß sie darin verschoben werden können, Festhaltemittel (40), die mit den Fliehgewichten verbunden sind und Spur (10) und Fliehgewichte (30) verbinden, damit sich diese radial nicht abtrennen können, Motoren (50), die jeweils mit einem der Fliehgewichte (30) verbunden sind, um sie in bezug zu der Spur (10) zu verschieben, eine Versorgung (60) für die Motoren (50) und eine Steuerung (70) umfaßt, um auf die Versorgung (60) jedes der Motoren (50) einzuwirken, um die Fliehgewichte (30) getrennt bzw. im Gleichklang zu verschieben, um während der Drehung eine Gegen-Unwucht zu erzeugen, die die Unwucht ausgleicht, die entstanden ist, und daß die Befestigungsmittel (20) der vorrichtung die Spur (10) gegen mindestens eine Kopplung (J) halten und daß Vibrationsdetektoren (D) auf mindestens einer Kopplung (J) und mindestens einem Lager (P) angeordnet sind.

2. Vorrichtung nach Anspruch 1, dadurch gekennzeichnet, daß die Spur (10) einen Reif (11) mit einem Flügel (111), der zur Achse (A) parallel ist, und eine Rollbahn (12) auf der Innenseite des Flügels (111), der zur Achse (Δ) parallel ist, umfaßt.

3. Vorrichtung nach Anspruch 2, dadurch gekennzeichnet, daß jedes Fliehgewicht (30) einen Schlitten (31), Räder (32), die den Schlitten (31) tragen und auf der Rollbahn (12) liegen, und einen Antriebsmechanismus (33), der mit dem Motor (50) gekoppelt ist, um die Räder (32) zum Drehen zu bringen, umfaßt.

4. Vorrichtung nach Anspruch 3, dadurch gekennzeichnet, daß der Antriebsmechanismus (33) mindestens einen Ritzel (331), der drehfest mit mindestens einem Rad (32) verbunden ist, und mindestens eine Schnecke (332) umfaßt, die in den Ritzel (331) eingreift und von dem Motor (50) bewegt wird.

5. Vorrichtung nach einem der Ansprüche 2 bis 4, dadurch gekennzeichnet, daß die Versorgung (60) mindestens ein Leitungsband (51), das von der Innenseite des Flügels (111) des Reifes (11), die zur achse (Δ) parallel ist, getrennt und von dieser getragen wird, und mindestens einen Schuh (62) umfaßt, der gegen das Band (61) gleiten kann und auf jedem Fliehgewicht (30) montiert ist.

6. Vorrichtung nach einem der Ansprüche 1 bis 5, dadurch gekennzeichnet, daß die Steuerung (70) einen Generator (71) von Steueranweisungen, um die Fliehgewichte (30) zu verschieben, und mindestens einen Fühler (72) für die Position jedes der Fliehgewichte (30) umfaßt.

7. Vorrichtung nach Anspruch 6, dadurch gekennzeichnet, daß die Steuerung (70) mit mindestens einem Vibrationsdetektor (D) der Achse (Δ) und mit einer Einheit (U) zur Informationsverarbeitung verbunden ist, um in Abhängigkeit von den erfaßten Vibrationen und den festgestellten Positionen der Fliehgewichte die Fliehgewichte derart zu bewegen, daß während der Drehung eine Gegen-Unwucht erzeugt wird, die die entstandene Unwucht ausgleicht.

**Claims**

1. Apparatus for dynamically balancing during rotation an energy-converting rotating machine designed to rotate about an axis (Δ) and having a main shaft (A) in several sections joined by couplings (J) and supported in bearings (P) and liable to develop an unbalance, characterised in that it comprises at least one circular track (10) coaxial with the axis (Δ), locating means (20) for holding this track fixed relative to the axis (Δ), at least two balancing masses (30) carried by this track (10) in a manner allowing them to be shifted, retaining means (40) associated with the masses and holding the track (10) and masses (30) in such a way that they cannot become separated radially, motors (50) each connected to one of the masses (30) for shifting them relative to the track (10), a supply (60) for the motors (50) and a control (70) for acting on the supply (60) of each of the motors (50) for the purpose of shifting the masses (30) separately or possibly in unison in a manner such as to generate in rotation an opposing unbalance cancelling out the unbalance which has arisen and in that the locating means (20) of the apparatus hold the track (10) against at least one coupling (J) and in that the vibration detectors (D) are placed on at least one coupling (J) and at least one bearing (P).

2. Apparatus according to claim 1, characterised in that the track (10) comprises a ring (11) with a flange (111) parallel to the axis (Δ) and a rolling track (12) on the inside face of the flange (111) parallel to the axis (Δ).

3. Apparatus according to claim 2, characterised in that each mass (30) comprises a carriage (31), wheels (32) carrying the carriage (31) and resting on the rolling track (12) and a driving mechanism (33) coupled to the motor (50) to rotate the wheels (32).

4. Apparatus according to claim 3, characterised in that the driving mechanism (33) comprises at least one pinion (331) connected for mutual rotation to at least one wheel (32) and at least one endless screw or worm (332) engaging the pinion (331) and driven by the motor (50).

5. Apparatus according to any one of claims 2 to 4, characterised in that the supply (60) comprises at least one conducting strip (51) insulated from and carried by the inside face of the flange (111) of the ring (11) parallel to the axis (Δ) and at least one tongue (62) designed to slide in contact with the strip (61) and mounted on each mass (30).

6. Apparatus according to any one of claims 1 to 5, characterised in that the control (70) comprises a generator (71) of instructions for controlling the shifting of the masses (30) and at least one pick-up (72) for the position of each of the masses (30).

7. Apparatus according to claims 6, characterised in that the control (70) is connected to at least one detector (D) of vibrations of the axis (Δ) and to a unit (U) for processing data for, as a function of the vibrations detected and of the positions of the masses picked up, causing displacement of the masses in a manner such as to generate during rotation an opposing unbalance to cancel out the unbalance which has arisen.

FIG.1

FIG.2A

FIG.2B

FIG.2C

10

## FIG. 3

FIG.4

FIG.5

EP 0 657 727 B1